# EUROPÄISCHE PATENTSCHRIFT

(11) **EP 0 534 391 B1**
(45) Veröffentlichungstag und Bekanntmachung des Hinweises auf die Patenterteilung: **06.12.1995**
(21) Anmeldenummer: 92116256.6
(22) Anmeldetag: 23.09.1992
(51) Int. Cl.: E04F 10/06, E05C 19/02, E05B 41/00, B60P 3/34

(54) **Sicherheitsvorrichtung für eine Markise**
Safety-device for a Florentine blind
Dispositif de sûreté pour une marquise

(30) Priorität: 26.09.1991 DE 4132017
(43) Veröffentlichungstag der Anmeldung: 31.03.1993
(73) Patentinhaber: Pozzi, Carlo Maurizio, CH-6977 Ruvigliana (CH)
(72) Erfinder: Pozzi, Carlo Maurizio, CH-6977 Ruvigliana (CH)
(74) Vertreter: Reichel, Wolfgang, Dipl.-Ing.

(56) Entgegenhaltungen:
- EP-A- 0 078 969
- EP-A- 0 230 476
- EP-A- 0 355 527
- DE-U- 9 017 146

## Beschreibung

Die Erfindung betrifft Markisen mit Sicherheitsvorrichtung mit einem fest installierten Gehäuse zur Aufnahme der Markisenrolle und einem über einen Verriegelungsmechanismus mit dem Gehäuse verbindbaren Blendenteil, das das ausfahrbare Ende der Markise enthält und zum Verschließen einer Ausfahröffnung im Gehäuse in seiner eingefahrenen Stellung dient, gemäß den Merkmalen im Oberbegriff des Patentanspruchs 1. Prinzipiell eignet sich die erfindungsgemäße Sicherheitsvorrichtung für alle möglichen, auch an Gebäuden befestigten Markisen, ist jedoch insbesondere bei an Fahrzeugen und beispielsweise Wohnwagen gehalterten Markisen besonders wichtig, da sich hier ein unbeabsichtigtes Öffnen des Markisengehäuses während der Fahrt besonders fatal auswirken kann.

Es gibt eine Fülle von verschiedenen Lösungen, um das Blendenteil mit dem darin aufgenommenen Markisenende in seiner eingefahrenen Stellung mit dem fest installierten Gehäuse zu verriegeln. Beispielsweise ist in der EP 0 230 476 B1, die im Oberbegriff des Patentanspruchs 1 gewürdigt ist, ein Verriegelungsmechanismus beschrieben, der eine solche zufällige, unbeabsichtigte Verriegelung verhindert. Im Gehäuse ist ein Zapfen mit kegelstumpfförmigem vorderen Ende und einer dahinter befindlichen Einrastnut vorgesehen. Im Blendenteil ist ein federbelasteter Metallhebel mit zwei Armen und einem Sitz an einem dieser Arme für die Einrastnut drehbar so gelagert, daß er beim Einziehen des Blendenteils auf das Gehäuse über das Kegelstumpfende des Zapfens in den Sitz auf dessen Einrastnut gezogen wird. Ein Ende des nicht den Sitz für die Einrastnut tragenden Arms ragt dabei stets seitlich aus dem Gehäuse heraus, wobei bei der Bewegung des Hebels über den Zapfen dieses Ende in vertikaler Richtung entsprechend der Verschiebung über das Kegelstumpfende bis zum Einrasten in der Zapfennut leicht verschoben wird. An diesem aus dem Gehäuse herausragenden Armende ist ein Haken vorgesehen, in den mit Hilfe einer auch zum Drehen der Markise verwendeten Stange dieses Armende und damit der gesamte Hebel so weit nach unten bewegt werden, daß sich der Sitz des Hebels wieder aus der Einrastnut löst, wobei zur Begrenzung dieser Abwärtsbewegung ein Anschlag im Blendenteil vorgesehen ist.

Die Voraussetzung dafür, daß ein solcher oder andere Verriegelungsmechanismen die geforderte Sicherheit erbringen, besteht darin, daß das Blendenteil wirklich ganz eingefahren ist und die zu verriegelnden Teile tatsächlich ineinandergreifen. Es hat sich in der Praxis gezeigt, daß es durchaus vorkommen kann, daß die Markisenöffnung von außen den Anschein erweckt, vollständig verschlossen zu sein, tatsächlich aber der Verriegelungszustand noch nicht herbeigeführt ist. Um der Gefahr eines solchen Fehlschlusses zu begegnen, kann man Markisen mit Mechanismen ausstatten, die das Blendenteil durch die Einfahrbewegung zwangsweise in eine Verriegelungsstellung ziehen. Solche Mechanismen sind jedoch nicht ohne einen höheren technischen Aufwand realisierbar und erfordern zumindest zusätzlich Zugarme, die am Blendenteil angreifen.

Der Erfindung liegt die Aufgabe zugrunde, eine Markise mit Sicherheitsvorrichtung der eingangs erwähnten Art zu schaffen, die eine Sicherstellung des verriegelten Zustands von Gehäuse und eingefahrenem Blendenteil ermöglicht und dabei einfach zu realisieren ist.

Diese Aufgabe wird durch den Gegenstand des Patentanspruchs 1 gelöst.

Erfindungsgemäß ist eine Warnvorrichtung vorgesehen, die immer dann eine Warnanzeige liefert, wenn der Verriegelungszustand trotz fast vollständig eingefahrenem Blendenteil noch nicht herbeigeführt ist, und diesen Zustand durch eine zuverlässige sichtbare Anzeige vom Zustand der erfolgten Verriegelung durch Sichtbarsein im einem und Nichtsichtbarsein im anderen der Zustände unterscheidet. Hierzu ist sowohl im Blendenteil als auch im Gehäuse je eine Einrichtung vorgesehen, die jeweils beim Einfahren des Blendenteils in das Gehäuse mit der anderen Einrichtung mechanisch so zusammenwirkt, daß die Warnanzeige den besagten Zustand sichtbar macht und den darauffolgenden Verriegelungszustand anzeigt. Eine der beiden Einrichtungen ist hierzu verschiebbar gelagert und mit der so ebenfalls verschiebbaren Warnvorrichtung versehen. Auf diese Weise ist für die die Markise bedienende Person eine zuverlässige Anzeige geschaffen, mit der die Person sich vergewissern kann, ob der Verriegelungszustand herbeigeführt ist oder nicht.

Die erforderlichen, mechanisch zusammenwirkenden Einrichtungen sind auf vielfältige Weise technisch einfach zu realisieren. Es reicht stets ein verschiebbares Teil aus, das die Warnvorrichtung trägt. Es sind jedoch auch Lösungen denkbar, die sowohl am Gehäuse als auch im Blendenteil verschiebbare Einrichtungen umfassen. Prinzipiell kann die verschiebbare Einrichtung mit der Warnvorrichtung sowohl am Blendenteil als auch am Gehäuse vorgesehen sein. Erfindungsgemäß wird jedoch letzteres bevorzugt.

Ferner wird vorzugsweise dafür gesorgt, daß die Warnvorrichtung (z.B. in Form eines roten Teils) nur dann sichtbar ist, wenn das Blendenteil gerade noch nicht vollständig eingeschoben und verriegelt ist, und anschließend verschwindet. Es sind jedoch auch Lösungen denkbar, bei denen die Warnvorrichtung in dem gerade noch nicht verriegelten Zustand nicht sichtbar ist (und hierdurch die Warnung gibt,) und erst beim Verriegelungszustand beispielsweise in Form eines grünen Teils sichtbar wird und die erfolgte Verriegelung anzeigt.

Die mechanisch zusammenwirkenden Einrichtungen umfassen nach einer vorteilhaften Weiterbildung jeweils ein dreiekkiges Teil am Blendenteil und am Gehäuse, wobei diese Teile bezüglich einander umgekehrt sind, so daß beim Übereinanderschieben der beiden Teile zunächst ein Teil nach unten verschoben wird (und hierbei die Warnvorrichtung sichtbar wird) und dann ein dreieckiges Teil hinter dem anderen einrastet.

Es sind jedoch auch zahlreiche andere Ausführungen denkbar, beispielsweise mit einem abgerundeten Vorsprung, der in eine entsprechende Ausnehmung einrastet, nachdem er das Teil, in dem die Ausnehmung ausgebildet ist, verschoben hat.

Die Verschiebung ist vorzugsweise über eine federbelastete Halterung realisiert. Gemäß einer bevorzugten Ausführung wird im Markisengehäuse durch eine Feder das verschiebbare Teil nach oben gedrückt, das an seiner Unterseite die Warnvorrichtung trägt. Beim Einschieben des Blendenteils drückt kurz vor der Stellung völliger Einschiebung ein vorspringendes fest im Blendenteil installiertes Teil das verschiebbare Teil gegen die Federkraft nach unten. Hat das vorspringende Teil das verschiebbare Teil überfahren, so drückt die Feder das verschiebbare Teil und damit die Warnvorrichtung wieder nach oben. In äquivalenter Weise kann ein verschiebbares Teil auch im Blendenteil vorgesehen werden und stattdessen ein festes Teil im Gehäuse so angeordnet sein, daß kurz vor der Verriegelung die Warnvorrichtung am verschiebbaren Teil sichtbar wird.

Die erfindungsgemäßen Merkmale der Sicherheitvorrichtung Können in bestehenden Markisen mit beliebigen Verriegelungsmechanismen für Blendenteil und Gehäuse zusätzlich installiert werden und erbringen dann eine zusätzliche Verriegelungswirkung. Es ist jedoch daneben möglich, den Eingriff der erfindungsgemäß mechanisch zusammenwirkenden Einrichtungen im Blendenteil und im Gehäuse für die Verriegelung so zu nutzen, daß bisherige aufwendigere Verriegelungsmaßnahmen vermeidbar sind und beide Funktionen -die einer Warnanzeige und die einer Verriegelung- von der erfindungsgemäßen Sicherheitsvorrichtung übernommen werden.

Im folgenden wird die Erfindung anhand der Zeichnungen näher erläutert. Es zeigen
FIG.1A, 1B, 1C ein Ausführungsbeispiel der erfindungsgemäßen Markise von der Seite und vom Gehäuseinnern aus gesehen bei noch ausgezogenem Blendenteil, bei fast vollständig eingeschobenem Blendenteil und bei verriegeltem Blendenteil und
FIG.2A, 2B die Markise der FIG.1 von der anderen Seite von außen gesehen in den Figuren 1A und 1B entsprechenden Stellungen.

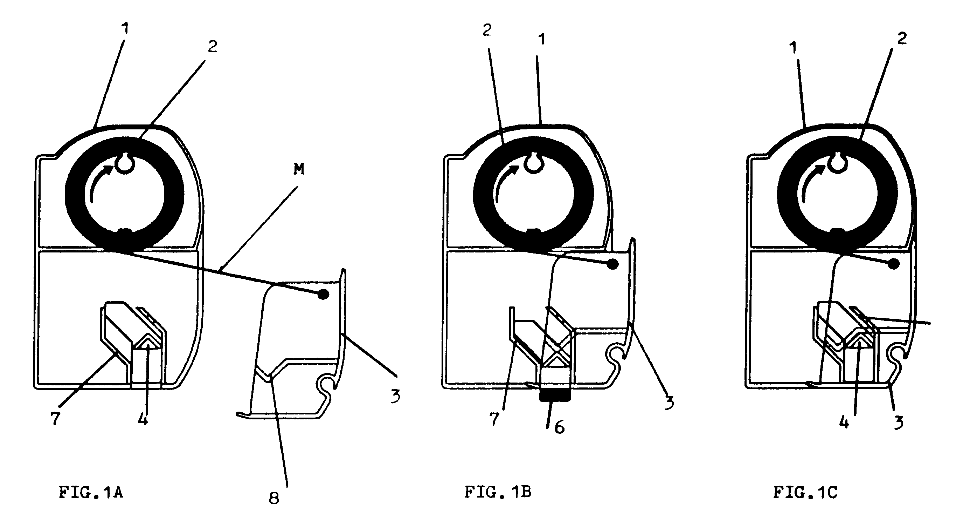

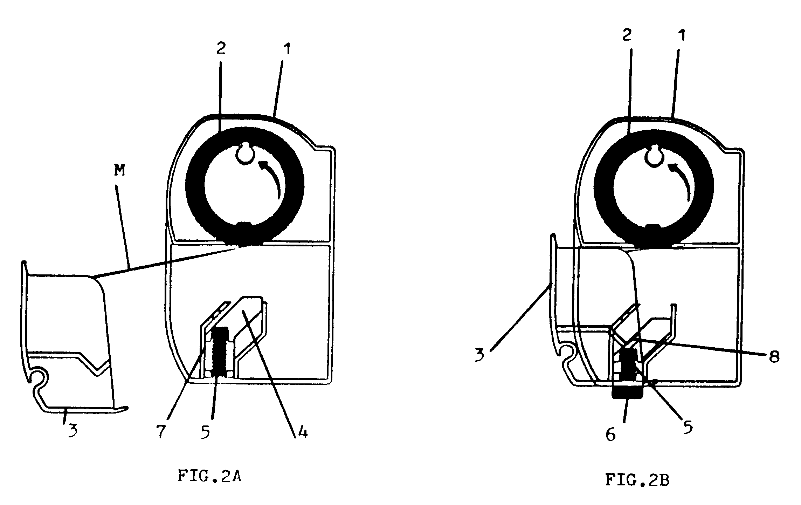

In FIG.1 und 2 ist in schematischer Weise ein Gehäuse 1 dargestellt, das an der Wand eines Gebäudes oder z.B. Freizeitfahrzeugs in nicht gezeigter Weise angebracht ist. Das Gehäuse 1 enthält die Markisenrolle 2, die im Gehäuse auf einer Welle drehbar gelagert ist. Über die Breite des Gehäuses ist eine Ausfahröffnung vorgesehen, durch die der Markisenstoff M ausziehbar ist, dessen vorderes Ende in einem Blendenteil 3 befestigt ist. Beim Einfahren der z.B. in üblicher Weise durch Gelenkarme aufgespannten Markise verschließt das Blendenteil 3 die Ausfahröffnung im Gehäuse.

Bei manchen Konstruktionen wird die Ausfahröffnung durch mehrteilige Deckel oder Blenden von oben und unten verschlossen. Auch für einen solchen Fall ist die erfindungsgemäße Vorrichtung einsetzbar.

Über dem Gehäuseboden ist im vorderen Bereich den Gehäuses 1 ein im Querschnitt dreieckiges Teil 4 mit der Spitze nach oben so gehaltert, daß es durch die Wirkung einer Schraubenfeder 5, die sich senkrecht vom Gehäuseboden erstreckt, nach oben gedrückt wird. Das oben dreieckige Teil 4 ist unten mit einem roten Warnkörper 6 versehen, der durch eine Ausnehmung im Boden des Gehäuses 1 nach außen führbar ist. Für das Teil 4 mit der Feder 5 sind seitliche Führungen 7 der in den Figuren 1 und 2 dargestellten Weise vorgesehen, die für eine seitliche Begrenzung der senkrechten Bewegung des Teils 4 mit Feder 5 sorgen.

Im Blendenteil 3 ist ein ebenfalls im Querschnitt dreieckiges Teil 8 vorgesehen, das über eine waagerechten Abschnitt mit der Innenseite der vorderen Wand der Blende 3 fest verbunden ist und bezüglich des Teils 4 um 180° gekippt mit der Spitze nach unten zum Gehäuseboden gerichtet angeordnet ist. Die Anordnung des Teils 4 im Gehäuse 1 und des Teils 8 im Blendenteil 3 sind derart, daß bei einer fast vollständigen Einführung des Blendenteils 3, wenn von außen bereits der Eindruck einer gänzlich verschlossenen Ausfahröffnung vermittelbar ist, die beiden Spitzen der dreieckigen Teile 4 und 8 ubereinanderstehen (FIG.1B) und das Teil 4 am weitesten nach unten gedrückt wird.

Beim Einfahren des Blendenteils 3 treffen zunächst die beiden vorderen Seiten der dreieckigen Teile 4 und 8 aufeinander. Während des weiteren Einschiebens wird das Teil 4 gegen die Wirkung der Feder 5 nach unten gedrückt, so daß der Warnkörper 6 nach unten aus dem Gehäuseboden herausgedrückt wird und sichtbar nach außen sichtbar anzeigt, daß noch keine Verriegelung vorliegt (FIG. 1B, 2B.)

Bei weiteren Einführen gleitet das Teil 8 vollständig über Teil 4 hinweg und rastet nach dem Hochschnellen des Teils 4 durch die Federwirkung dahinter ein (FIG.1A), wobei die hinteren Seiten der Dreiecke formschlüssig aneinanderliegen. Dabei wird der Warnkörper 6 zurück in das Gehäuse gezogen und es wird somit angezeigt, daß das Blendenteil 3 mit dem Gehäuse 1 verriegelt ist.

Diese Anzeige ist insbesondere von hohem Sicherheitswert für Markisen an Fahrzeugen oder gezogenen Wohnwagen denn durch diese Möglichkeit der Vergewisserung kann die Bedienungsperson eine Öffnung der Markise während der Fahrt zuverlässig ausschließen. Solange der Warnkörper 6 noch sichtbar ist, wird ihr angezeigt, daß die Verriegelung noch nicht erreicht ist.

Neben diesem bevorzugten Ausführungsbeispiel sind zahlreiche alternative Lösungen möglich. Z.B. kann der Warnkörper auch seitlich sichtbar werden. Ferner sind Lösungen denkbar, bei denen ein beweglicher Körper am Blendenteil 3 vorgesehen wird, der durch ein festes vorspringendes Teil im Gehäuse 1 bewegt wird. Auch die Form der mechanisch zusammenwirkenden Teile kann grundsätzlich anders sein, wobei sowohl seitlich als auch im mittleren Abschnitt der Markise solche zusammenwirkenden Teile mit Warnkörpern vorgesehen sein können.

## Patentansprüche

1. Markise mit Sicherheitsvorrichtung mit einem fest installierten Gehäuse (1) zur Aufnahme der Markisenrolle (2) und einem über einen Verriegelungsmechanismus mit dem Gehäuse verbindbaren Blendenteil (3), das das ausfahrbare Ende der Markise (M) enthält und zum Verschließen einer Ausfahröffnung im Gehäuse in seinem eingefahrenen Zustand dient, wobei eine erste (8) im Blendenteil (3) und eine zweite (4) im Gehäuse (1) vorgesehene Einrichtung beim Verriegeln mechanisch zusammenwirken, von denen eine (4) verschiebbar gelagert ist,
gekennzeichnet durch eine Warnvorrichtung (6), die an der verschiebbaren (4) dieser Einrichtungen vorgesehen ist und die beim Einfahren des Blendenteils (3) in das Gehäuse (1) über die mechanische Zusammenwirkung der ersten (8) und der zweiten (4) Einrichtung derart betätigbar ist, daß sie eine sichtbare Anzeige zur Unterscheidung eines Zustandes des noch nicht vollständig eingefahrenen und mit dem Gehäuse verriegelten Blendenteils vom Zustand der erfolgten Verriegelung durch Sichtbarsein in einem und Nichtsichtbarsein im anderen dieser Zustände liefert.

2. Markise nach Anspruch 1,
dadurch gekennzeichnet,
daß die Warnvorrichtung (6) so betätigbar ist, daß sie (z.B. in Form eines roten Teils) nur dann sichtbar ist, wenn das Blendenteil (3) gerade noch nicht vollständig eingeschoben und verriegelt ist, und anschließend verschwindet, oder daß sie alternativ im gerade noch nicht verriegelten Zustand nicht sichtbar ist und erst im Verriegelungszustand (z.B. in Form eines grünen Teils) sichtbar wird und die erfolgte Verriegelung anzeigt.

3. Markise nach Anspruch 1,
dadurch gekennzeichnet,
daß die erste Einrichtung ein fest im Blendenteil (3) installiertes vorspringendes Teil (8) umfaßt und daß die zweite Einrichtung (4) über dieses vorspringende Teil verschiebbar im Gehäuse (1) gelagert ist und die Warnvorrichtung umfaßt.

4. Markise nach Anspruch 3,
dadurch gekennzeichnet,
daß die zweite Einrichtung (4) federelastisch im Gehäuse gelagert ist.

5. Markise nach Anspruch 3 oder 4,
dadurch gekennzeichnet,
daß die zweite Einrichtung (4) auf der Innenseite der Bodenwandung des Gehäuses (1) gelagert ist und die Warnvorrichtung (6) im sichtbaren Zustand aus der Bodenwandung herausragt.

6. Markise nach einem der vorhergehenden Ansprüche,
dadurch gekennzeichnet,
daß die erste und die zweite Einrichtung (4,8) bei vollständig eingefahrener, schließender Stellung des Blendenteils (3) ineinander eingerastet sind.

7. Markise nach einem der vorhergehenden Ansprüche,
dadurch gekennzeichnet,
daß die erste und die zweite Einrichtung jeweils dreieckige, mechanisch zusammenwirkende Teile (4,8) umfassen, wobei eines mit der Spitze nach oben und das andere mit der Spitze nach unten gelagert ist und die dreieckigen Teile bei eingefahrener, schließender Stellung des Blendenteils (3) hintereinander liegend eingerastet sind.

8. Markise nach einem der Ansprüche 5 bis 7,
dadurch gekennzeichnet,
daß die an der verschiebbaren Einrichtung (4) vorgesehene Warnvorrichtung (8) im noch nicht vollständig eingefahrenen Zustand des Blendenteils (3) nach außen sichtbar und im vollständig eingefahrenen, verriegelten Zustand des Blendenteils (3) nach außen nicht sichtbar ist.

## Claims

1. An awning comprising a safety device with a permanently installed housing (1) for accomodation of the awning roll (2) and with a shutter section (3) which can be secured to said housing by means of a locking mechanism and which contains the run-out end of the awning (M) and in its retracted position serves to close a run-out opening in the housing, whereby first means (8) provided in said shutter section (3) and second means (4) provided in said housing (1) cooperate mechanically while interlocking, one of said means (4) being displaceably mounted,
**characterized** by a warning device (6) provided at said displaceable one (4) of said means and which can be actuated upon the retraction of said shutter section (3) into said housing (1) through the mechanical cooperation of said first means (8) and of said second means (4) such that it provides a visible indication for distinguishing a condition of the shutter section in which it has not yet been fully retracted into the housing and interlocked with the housing from the condition of the accomplished interlocking by being visible in the one condition and not being visible in the other of said conditions.

2. An awning according to claim 1,
**characterized in that**
the warning device (6) can be actuated such that it (for example in the form of of a red part) is only visible if the shutter section (3) just is not yet fully retracted and interlocked and subsequently disappears or that, alternatively, it is not visible in the just not yet interlocked condition and becomes visible only in the interlocked condition (for example in the form of a green part) and indicates the accomplished interlocking.

3. An awning according to claim 1,
**characterized in that**
said first means comprise a projecting member (8) being permanently installed in said shutter section (3) and that said second means (4) is displaceably mounted in the housing (1) via said projecting member and comprises the warning device.

4. An awning according to claim 3,
**characterized in that**
said second means (4) are spring supported in the housing.

5. An awning according to claim 3 or 4,
**characterized in that**
said second means (4) is mounted on the inner surface of the bottom of the housing (1) and that in the visible position the warning device (6) projects from the bottom.

6. An awning according to one of the preceding claims,
**characterized in that**
said first and second means (4, 8) are latched together when the shutter section (3) is in the fully retracted, closing position.

7. An awning according to one of the preceding claims,
**characterized in that**
said first and second means each comprise triangular, mechanically cooperating parts (4, 8), one supported pointing upward with its vertex and the other pointing downward with its vertex and that when the shutter section (3) is in the retracted, closing position the triangular parts are locked in place lying one after the other.

8. An awning according to one of claims 5 to 7,
**characterized in that**
said warning device (8) provided on said displaceable means (4) is outwardly visible when said shutter section (3) is in the not yet fully retracted position, and is outwardly invisible when the shutter section (3) is in the fully retracted, locked position.

## Revendications

1. Banne avec dispositif de sécurité, avec un carter (1) installé à demeure pour recevoir le rouleau de banne (2) et une partie d'écran (3), pouvant être reliée au carter par l'intermédiaire d'un mécanisme de verrouillage et contenant l'extrémité déployable de la banne (M) et servant à obturer, à son état rétracté, une ouverture de déploiement ménagée dans le carter, un premier dispositif (8) prévu dans la partie d'écran (3) et un deuxième dispositif (4) prévu dans le carter (1), coopérant mécaniquement lors du verrouillage, l'un d'entre eux (4) étant monté de façon déplaçable, caractérisée par un dispositif d'avertissement (6), qui est prévu sur celui de ces dispositifs (4) qui est déplaçable et qui, lors de la rétraction de la partie d'écran (3) dans le carter (1), peut être actionné, par l'intermédiaire de la coopération mécanique entre le premier dispositif (8) et le deuxième dispositif (4), de telle manière à fournir une indication visuelle servant à distinguer un état de la partie d'écran non encore complètement rétractée et verrouillée avec le carter, de l'état dans lequel le verrouillage est effectué, par une indication visible, dans un premier état, et une indication non visible, dans l'autre de ces états.

2. Banne selon la revendication 1, caractérisée en ce que le dispositif d'avertissement (6) peut être actionné de manière à ce qu'il ne soit visible (par exemple sous la forme d'une partie rouge) que lorsque la partie d'écran (3) est juste encore non-complètement rétractée et verrouillée et de manière à disparaître ensuite ou bien que, alternativement, elle ne soit pas visible dans l'état juste encore non-verrouillé, et ne devienne visible qu'à l'état verrouillé (par exemple sous la forme d'une partie verte) et indique que le verrouillage est effectué.

3. Banne selon la revendication 1, caractérisée en ce que le premier dispositif comprend une partie (8) faisant saillie, installée, à demeure, dans la partie d'écran (3) et en ce que le deuxième dispositif (4) est monté dans le carter (1) de façon déplaçable par cette partie en saillie, et comprend le dispositif d'avertissement.

4. Banne selon la revendication 3, caractérisée en ce que le deuxième dispositif (4) est monté élastiquement, à ressort, dans le carter.

5. Banne selon la revendication 3 ou 4, caractérisée en ce que le deuxième dispositif (4) est monté en face intérieure de la paroi de fond du carter (1) et le dispositif d'avertissement (6) sort de la paroi de fond, à l'état visible.

6. Banne selon l'une des revendications précédentes, caractérisée en ce que le premier et le deuxième dispositifs (4, 8) sont encliquetés l'un dans l'autre, dans la position complètement rétractée, avec effet de fermeture de la partie d'écran (3).

7. Banne selon l'une des revendications précédentes, caractérisée en ce que le premier et le deuxième dispositif comprennent chacun des parties (4, 8) triangulaires, coopérant mécaniquement, une partie étant montée avec la pointe vers le haut et l'autre avec la pointe vers le bas, et les parties triangulaires étant encliquetées horizontalement l'une derrière l'autre lorsque la partie d'écran (3) se trouve dans la position rétractée, à effet de fermeture.

8. Banne selon l'une des revendications 5 à 7, caractérisée en ce que le dispositif d'avertissement (8) prévu sur le dispositif (4) déplaçable est visible vers l'extérieur lorsque la partie d'écran (3) se trouve à l'état non complètement rétracté et n'est pas visible vers l'extérieur lorsque la partie d'écran (3) se trouve a l'état complètement rétracté, verrouillé.
